# EUROPÄISCHE PATENTSCHRIFT

(11) **EP 0 432 483 B1**
(45) Veröffentlichungstag und Bekanntmachung des Hinweises auf die Patenterteilung: **04.05.1994**
(21) Anmeldenummer: 90121693.7
(22) Anmeldetag: 13.11.1990
(51) Int. Cl.: F01N 3/28

(54) **Katalysatoreinrichtung zur Abgasreinigung**
Catalytic converter arrangement for purification of exhaust gases
Dispositif de catalyseur pour purifier les gaz d'échappement

(30) Priorität: 09.12.1989 DE 3940747
(43) Veröffentlichungstag der Anmeldung: 19.06.1991
(73) Patentinhaber: MERCEDES-BENZ AG, 70327 Stuttgart (DE)
(72) Erfinder: Latz, Herbert, Dipl.-Ing. (FH), D-7062 Steinenberg (DE); Bockel, Heinrich, D-7052 Schwaikheim (DE)

(56) Entgegenhaltungen:
- DE-A- 2 321 578
- FR-A- 2 617 929
- US-A- 3 957 447
- US-A- 4 175 107
- PATENT ABSTRACTS OF JAPAN, Band 7, Nr. 29 (M-191)[1174], 5. Februar 1983; & JP-A-57 183 511 (TOYOTA) 11-11-1982

## Beschreibung

Die Erfindung betrifft eine Katalysatoreinrichtung zur Abgasreinigung nach dem Oberbegriff des einzigen Patentanspruchs.

Eine an dem Katalysator selbst in Abhängigkeit der Temperatur des Abgases unterschiedlich große Anströmflache, die bei geringen Abgastemperaturen kleiner als bei hohen Abgastemperaturen ist, ermöglicht nach dem Start einer Brennkraftmaschine ein schnelles lokales Aufheizen des Katalysators. Ein schnelles Aufheizen des Katalysators ist erwünscht, da eine befriedigende katalytische Umsetzung erst nach Erreichen bestimmter Temperaturen einsetzt.

Um solche lokal raschen Aufheizungen zu erreichen, ist es bereits bekannt, die Größe des Anströmquerschnittes des Katalysators durch verschiedene Einrichtungen temperaturabhängig zu steuern.

In der JP-A-57-183511 sind in dem stromauf des Katalysators gelegenen Anströmraum Klappen vorgesehen, die durch einen temperaturabhängig wirkenden Verstellmechanismus so um eine Achse verschwenkt werden können, daß die Größe der Anströmfläche des Katalysators veränderbar ist. Derartige Klappen benötigen allerdings einen recht aufwendigen Verstellmechanismus.

Bei einer Einrichtung nach DE-A-23 21 578 ist stromauf des Katalysators eine Ablenkvorrichtung vorgesehen, mit der heiße Abgase bzw. Abgase bei einem bereits aufgeheizten Katalysator an einem direkten Auftreffen auf den Katalysator gehindert werden, während die Gase bei noch nicht vollständig aufgeheiztem Katalysator unabgelenkt auf diesen auftreffen können. Die Betätigung der Ablenkvorrichtung kann durch ein in die Ablenkvorrichtung integriertes Bimetall erfolgen.

Aus der DE-A-37 38 538 ist es weiterhin bekannt, vor dem eigentlichen Katalysator einen sich stromauf konisch verjüngenden Raum vorzusehen, in den von dem verjüngten Ende aus ein zylindrisches Rohr auf den Katalysator aufgeschoben werden kann. Eine nach dem Start einer Brennkraftmaschine gewünschte kleine Abgasauftrefffläche auf den Katalysator wird bei dieser Ausführung dadurch erreicht, daß das Rohr hierzu direkt an die wirksame Katalysatorfläche geschoben und anschließend bei ausreichend aufgeheiztem Katalysator wieder aus dem konischen dem Katalysator vorgelagerten Raum entfernt wird. Für das Verschieben dieses Rohres ist ein relativ komplizierter Antriebsmechanismus erforderlich.

Schließlich ist aus der US-A-4.175.107 eine Katalysatoreinrichtung bekannt, welche zwei mit Abstand voneinander in einem Gehäuse angeordnete Katalysatoren und eine am Ausgang des in Abgasströmungsrichtung ersten Katalysators vorgesehene düsenförmige Blende zur Steuerung des Abgasstromes durch beide Katalysatoren umfaßt. Die Blende setzt sich aus mehreren Segmenten aus einem Bimetall zusammen, die bei niedriger Abgastemperatur einen kleinen Durchtrittsquerschnitt und mit zunehmender Abgastemperatur einen größer werdenden Durchtrittsquerschnitt freigeben. Hierdurch wird bei niedrigen Abgastemperaturen das Abgas vornehmlich durch den ersten Katalysator und mit steigender Abgastemperatur durch den zweiten Katalysator gelenkt. Da der erste Katalysator eine kleinere Masse besitzt als der zweite Katalysator, erreicht dieser schneller die erforderliche Anspringtemperatur als der zweite Katalysator.
Bei dieser Katalysatoreinrichtung dient die Blende zur Steuerung des Abgasstromes zwischen dem ersten und zweiten Katalysator und nicht zur Steuerung einer Abgasauftrefffläche.

Der Erfindung liegt die Aufgabe zugrunde, eine Abgasleiteinrichtung zu schaffen, die einfacher aufgebaut ist und die die Größe der Abgasauftrefffläche genauer steuern kann.

Gelöst wird diese Aufgabe durch eine nach den kennzeichnenden Merkmalen des einzigen Patentanspruchs ausgebildete Katalysatoreinrichtung.

Hiernach strömt das Abgas bei niedrigen Temperaturen durch eine sich zum Katalysator hin verjüngende umfangsmäßig geschlossene Düse, aus der das Abgas auf einen kleinen Katalysatorauftreffbereich exakt gebündelt geleitet werden kann. Das Öffnen der Düse erfolgt dadurch, daß die einzelnen über den Umfang verteilten Segmente sich in sich selbst wie die Blätter des Blütenkelches einer Blume nach außen wölben und dadurch einen geöffneten Kelch bilden.

Die radiale temperaturabhängige Biegsamkeit der Düsensegmente läßt sich durch eine Ausbildung dieser Segmente als Bimetall- oder Memory-Elemente erreichen. Memoryelemente sind aus einem metallischen Material mit temperaturgesteuertem Formerinnerungsvermögen und als solche im Stand der Technik an sich allgemein bekannt. Durch die materialbedingte Eigenschaft der erfindungsgemäß vorgeschlagenen Düsen-Elemente steuert sich die Abgasleitvorrichtung aus eigener Kraft, wodurch ein gesonderter Antrieb eingespart werden kann. Auch kann der für einen getrennten Antrieb erforderliche Temperaturfühler entfallen, da die erfindungsgemäßen Düsen-Elemente durch ihre Lage innerhalb des Abgasstromes dessen Temperatur jeweils direkt selbst erfühlen können.

Besonders zweckmäßig ist es, die Düse der Abgasleitvorrichtung auf ihrem gesamten Umfang aus temperaturabhängig sich selbsttätig verbiegenden Segmenten aufzubauen.

Ein Ausführungsbeispiel der Erfinddung ist in der Zeichnung dargestellt.

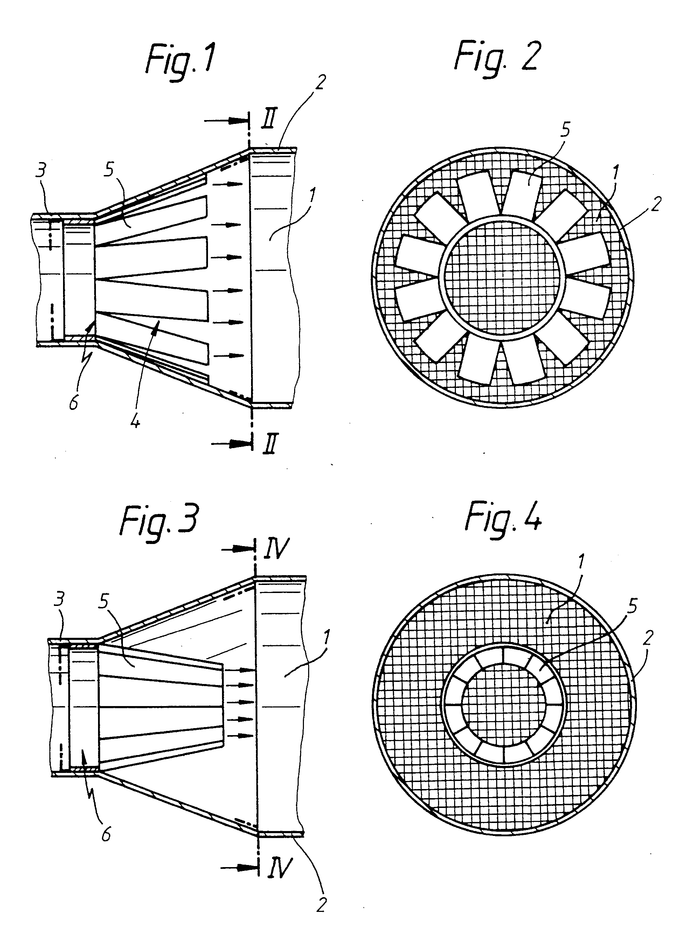

Es zeigen
- Fig. 1: einen Schnitt durch ein Katalysatorgehäuse mit einer nicht geschnittenen Abgasleitvorrichtung mit maximal geöffnetem Abgasaustrittsquerschnitt
- Fig 2: eine Ansicht auf die Abgasleitvorrichtung nach Linie II-II in Fig. 1
- Fig. 3: die Einrichtung nach Fig. 1 mit maximal verkleinertem Austrittsquerschnitt der Abgasleitvorrichtung
- Fig. 4: eine Ansicht auf die Abgasleitvorrichtung nach Linie IV-IV in Fig. 3
Der eigentliche Katalysator 1 liegt in einem Gehäuse 2, das stromauf des Katalysators 1 sich konisch verjüngend in eine zylindrische Abgasleitung 3 übergeht. Aus der Abgasleitung 3 führt als Abgasleitvorrichtung 4 eine aus einzelnen Segmenten 5 aufgebaute Düse 6 in den sich vor dem Katalysator konisch erweiternden Raum bis kurz vor den Katalysator 1. Die Segmente 5 sind aus Bimetall und in der Lage, sich bei hoher Abgastemperatur in Richtung auf ein Öffnen der Düse 6wie das Blatt eines Blütenkelches nach radial außen aufzubiegen. Bei niedriger Abgastemperatur biegen sich diese Segmente 5 derart nach radial innen, daß eine umfangsmäßig geschlossene sich in Richtung auf den Katalysator 1 von der Abgasleitung 3 aus gesehen konisch verjüngende Düse 6 entsteht. Die Düse 6 mit voll geöffnetem Austrittsquerschnitt ist in den Fig. 1 und 2 und diejenige mit kleinstem Öffnungsquerschnitt ist in den Fig. 3 und 4 dargestellt.

Mit der erfindungsgemäßen ihren Öffnungsquerschnitt selbst temperaturabhängig steuernden segmentartig aufgebauten Düse 6 kann bei kaltem Abgas auf recht einfache und exakt wirkende Weise ein lokal begrenzter Bereich des Katalysators 1 rasch aufgeheizt werden.

## Patentansprüche

1. Katalysatoreinrichtung zur Abgasreinigung, insbesondere bei Brennkraftmaschinen, mit einem von dem Abgas angeströmten Katalysator (1) der in einem innerhalb der Abgasleitung (3) angeordneten Gehäuse (2) angeordnet ist, das stromauf des Katalysators (1) mit einem konisch sich verjüngenden Gehäuseteil an die Abgasleitung (3) angeschlossen ist, wobei die Größe der von dem Abgas direkt angeströmten Katalysatorfläche von der Temperatur des Abgases abhängig ist und bei niedriger Temperatur ihren kleinsten und bei hoher Temperatur ihren höchsten Wert besitzt, und wobei eine stromauf des Katalysators (1) liegende Abgasleitvorrichtung (4) mit auf den Katalysator (1) weisender im Strömungsquerschnitt veränderbarer Austrittsöffnung die jeweils direkt beaufschlagte Katalysatorfläche bestimmt,
**dadurch gekennzeichnet,**
daß die Abgasleitvorrichtung (4) eine aus einzelnen Segmenten (5) aufgebaute axial auf den Katalysator (1) ausgerichtete Düse (6) ist, deren Segmente (5) aus Bimetall oder einem Metall aus einer Formgedächtnislegierung bestehen, die in einem zylinderförmigen Ring gehalten sind, der im Endabschnitt der Abgasleitung (3) eingesetzt ist, daß der Querschnitt der Austrittsöffnung bei niedriger Abgastemperatur kleiner ist als der Querschnitt der Abgasleitung (3), und daß bei hohen Abgastemperaturen die Segmente (5) innen am konischen Gehäuseteil des Gehäuses (2) anliegen.

## Claims

1. Catalyst device for exhaust-gas purification, especially on internal-combustion engines, with a catalyst (1) receiving an incident flow of exhaust gas, which is arranged in a housing (2) which is arranged in the exhaust-gas line (3) and, upstream of the catalyst (1), is connected to the exhaust gas line (3) by a conically narrowing housing part, the size of the catalyst surface receiving a direct incident flow of exhaust gas being a function of the temperature of the exhaust gas and having its minimum value at a low temperature and its maximum value at a high temperature, and an exhaust-gas guide device (4) located upstream of the catalyst (1) and with an outflow orifice pointed towards the catalyst (1) and of variable flow cross-section determining the respective catalyst surface receiving a direct incident flow, characterized in that the exhaust-gas guide device (4) is a nozzle (6) which is composed of individual segments (5) and is aligned axially with the catalyst (1) and the segments (5) of which are composed of a bimetallic material or of a metal consisting of a memorious alloy, which are held in a cylindrical ring inserted in the end section of the exhaust-gas line (3), in that the cross-section of the outflow orifice is smaller at a low exhaust-gas temperature than the cross-section of the exhaust-gas line (3), and in that at high exhaust-gas temperatures the segments (5) rest against the inside of the conical housing part of the housing (2).

## Revendications

1. Dispositif de catalyseur pour purifier les gaz d'échappement, en particulier dans le cas des moteurs à combustion interne, comportant un catalyseur (1) qui est parcouru par les gaz d'échappement et qui est disposé dans une enveloppe (2) qui est disposée à l'intérieur du tuyau (3) des gaz d'échappement et qui, en amont du catalyseur (1), est reliée au tuyau (3) des gaz d'échappement par une partie d'enveloppe qui va en se rétrécissant en cône, dispositif dans lequel la dimension de la surface du catalyseur directement traversée par les gaz d'échappement dépend de la température des gaz d'échappement et possède, à température plus basse, sa plus petite valeur et, à température plus haute, sa plus grande valeur, et dispositif dans lequel un organe (4) de guidage des gaz d'échappement, qui est situé en amont du catalyseur (1) et présente, en direction du catalyseur (1), une ouverture de sortie de section d'écoulement variable, détermine la surface du catalyseur chaque fois directement exposée,
dispositif caractérisé
par le fait que l'organe (4) de guidage des gaz d'échappement est une buse (6) qui est constituée de plusieurs segments (20), dont l'axe est aligné avec le catalyseur (1) et dont les segments (5) sont constitués d'un bimétal ou d'un métal en alliage à mémoire de forme et sont maintenus dans une couronne de forme cylindrique insérée dans le tronçon d'extrémité du tuyau (3) des gaz d'échappement, par le fait qu'à basse température les gaz d'échappement, la section de l'ouverture de sortie est inférieure à la section du tuyau (3) du gaz d'échappement et qu'à haute température les gaz d'échappement, les segments (5) s'appuient intérieurement contre une partie conique de l'enveloppe (2).
